# EUROPEAN PATENT APPLICATION

(11) **EP 1 529 687 A2**
(43) Date of publication of application: **11.05.2005**
(21) Application number: 04105297.8
(22) Date of filing: 26.10.2004
(51) Int. Cl.: B60Q 1/12, B60Q 1/08

(54) **Vehicle with steerable lighting means**

(30) Priority: 07.11.2003 SE 3029386
(71) Applicant: Scania CV AB, 151 87 Södertälje (SE)
(72) Inventor: Björing, Gunnar, 118 27 Stockholm (SE)

(57) **Abstract**

A lighting device for a motor vehicle (1) is described together with a vehicle comprising such a lighting device. The lighting device comprises at least two lighting means (9,11) for illuminating an area in front of the motor vehicle (1), and a control unit (16,17) for controlling the electric power to the lighting means (9,11) according to an input signal which indicates a parameter for the motor vehicle (1). Each of the lighting means (9,11) is arranged to illuminate at least one area more powerfully than the other lighting means (9,11) illuminates the area. The control unit (16,17) is arranged to increase the electric power to at least one of the lighting means (9,11) and decrease the power to at least one of the lighting means (9,11), in response to receiving an input signal which indicates a change in the parameter for the motor vehicle (1), so that the total light power emitted does not exceed predetermined values at any point illuminated by the lighting means (9,11).

## Description

### Technical field

The present invention relates to a lighting device for a motor vehicle with lighting means for illuminating an area in front of the motor vehicle. The present invention also relates to a motor vehicle equipped with such a lighting device.

### Background technology

Ideas about equipping vehicles with headlamps which light up the road ahead are of long standing within the vehicle industry. Previous variants on this theme have been based on having a mechanical connection between the steering wheel and the headlamps so that the headlamps turn in the same direction as the steering wheel. This is a solution that requires advanced and properly set mechanical contrivances if it is to give an acceptable result. Making the necessary mechanical contrivances for such pivotable headlamps is also relatively expensive.

Ordinary incandescent lamps with filaments have traditionally been used on vehicles but the use of gas discharge lamps on vehicles has recently become increasingly widespread. Gas discharge lamps often illuminate a broader area than ordinary traditional incandescent lamps, making it possible to provide more illumination at the side of the vehicle.

American patent 6,443,602 describes a vehicle headlamp which can be provided with a gas discharge lamp. The headlamp is provided with an upper and a lower reflector. The upper reflector is pivotable so that it can be turned and reflect light sideways. The headlamp is arranged on the vehicle in such a way that a sensor detects whether the wheels of the vehicle are being turned. If such is the case, the upper reflector turns so as to provide more illumination at the side of the vehicle. At the same time, the power supplied to the lamp is increased. However, the headlamp concerned has moving parts, which means that it needs setting if it is to provide illumination correctly. The headlamp will also be relatively complicated to make.

There is thus a need for an alternative lighting device for a motor vehicle which meets the need in certain cases to provide more illumination at the side of the vehicle but which has no moving parts.

### Summary of the invention

One object of the present invention is to provide a lighting device for a motor vehicle which solves at least one of the problems of the state of the art.

A further object of the present invention is to provide a lighting device for a motor vehicle which is arranged to be able to provide illumination at the side of the road but which lighting device does not comprise any moving parts.

A further object of the present invention is to provide a motor vehicle with an alternative lighting device which makes it possible to provide illumination at the side of the road but does not comprise any moving parts.

At least one of the above objects is achieved with a lighting device or a motor vehicle according to the independent claims.

Further advantages of the invention are achieved with the features defined by the dependent claims.

A lighting device for motor vehicle according to the invention comprises at least two lighting means for illuminating the area in front of the motor vehicle, and a control unit for controlling the electric power to the lighting means according to an input signal which indicates a parameter for the motor vehicle. Each of the lighting means is arranged to illuminate at least one area more powerfully than the other lighting means lights the area. The control unit is arranged to increase the electric power to at least one of the lighting means and reduce the power to at least one of the other lighting means, in response to receiving an input signal which indicates a change in the parameter for the motor vehicle, so that the total light power delivered does not exceed predetermined values at any point illuminated by the lighting means. With the lighting means according to the invention it is easy to vary the spatial distribution of the light without having to arrange mechanically movable parts in the lighting means.

The input signal may indicate the direction of at least one steered wheel. This is an easy way of detecting a change of direction of the motor vehicle which brings about a change in the power supplied to the headlamps. The motor vehicle may also be at standstill at the time of detection.

Alternatively the input signal may indicate the motor vehicle's acceleration transverse to the main direction of movement. An advantage of detecting the acceleration transverse to the main direction of movement is that acceleration sensors are inexpensive and easy to make. However, the vehicle has to be in motion for it to be possible for turning of the wheels to be detected.

The control unit may be arranged to determine a main direction on the basis of the signal from the sensor and to increase the electric power supplied to one of the lighting means so that more light is emitted in the main direction determined. Such a direction indicates where the motor vehicle is heading. Controlling the light does of course not necessarily entail determining the direction. It is possible to make an implicit determination of a direction by quite simply controlling the electric power so that the final result is that the light is steered mainly where the motor vehicle is heading.

The lighting means may be gas discharge lamps, which are advantageous in that there is a greater possibility of varying the amount of light from such lamps. Alternatively, ordinary incandescent lamps may be used in a lighting device according to the invention.

The control unit may be arranged to send electric power to the lighting means in the form of pulses and to control the power by controlling the ratio between the length of the pulses and the spacing between the pulses. This is an easy way of controlling the power, since all that is needed is to arrange a switching means which can connect and disconnect the power to the lighting means.

The control unit may be divided into a control means and a powering means, the powering means being arranged in the vicinity of the lighting means.

According to another aspect of the present invention, a motor vehicle is provided with a lighting device comprising at least two lighting means for illuminating the area in front of the motor vehicle, a sensor for measuring a parameter for the vehicle, and a control unit for controlling the electric power to the lighting means according to the measured parameter for the motor vehicle. Each of the lighting means is arranged to illuminate at least one area more powerfully than the other lighting means illuminates the area. The control unit is arranged to increase the electrical power to at least one of the lighting means and reduce the power to at least one of the other lighting means, in response to receiving an input signal which indicates a change in the parameter for the motor vehicle, so that the total light power emitted does not exceed predetermined values at any point illuminated by the lighting means.

The motor vehicle may be arranged so that at least one lighting means is arranged on each side of the vehicle's centreline, whereby the lighting means arranged to the right of the centreline is arranged to provide more illumination on the right side of the vehicle's centreline and the lighting means arranged to the left of the centreline is arranged to provide more illumination on the left side of the vehicle's centreline. This is the preferred configuration of the lighting means for a four-wheeled motor vehicle, but it is perfectly possible to arrange the lighting means above one another in the case of, for example, motorcycles.

The features described in connection with the lighting device may of course also be combined with a vehicle according to the invention, with the same advantages as described in connection with the lighting device.

The lighting device may be a headlamp.

The various features described above may of course be combined in the same embodiment.

Preferred embodiments of the invention are described below with reference to the attached drawings, in which the same reference notations are used for similar features in the various diagrams.

### Brief description of the drawings

Fig. 1 depicts schematically a motor vehicle equipped with a lighting device according to an embodiment of the present invention.
Figs. 2a and 2b respectively depict schematically the light distribution from a motor vehicle when it is being driven straight ahead and when it is turning.
Fig. 3 is a diagram showing how the light distribution is a function of the angle from the motor vehicle's centreline when the motor vehicle is being driven straight ahead and when it is turning.

### Description of preferred embodiments

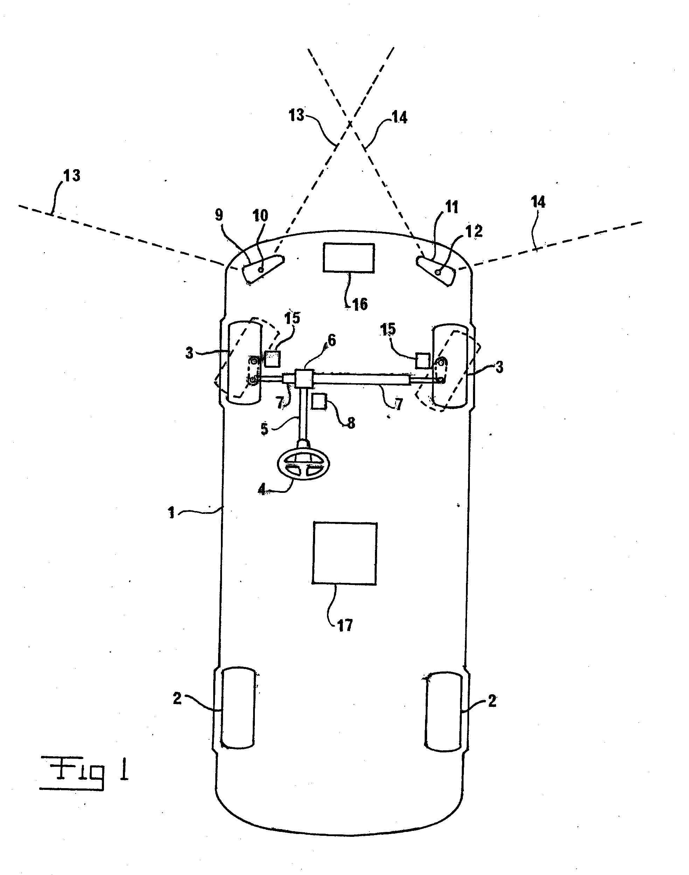

Fig. 1 depicts a motor vehicle 1 according to an embodiment of the present invention. The vehicle 1 has two rear wheels 2 and two front wheels 3 and a steering wheel 4 which is arranged for turning the front wheels 3. The steering wheel 4 is connected to the front wheels 3 by a steering rod 5 which via a steering gear 6 acts upon the front wheels 3 via tierods 7. A steering sensor 8 is arranged for measuring the rotation of the steering rod 5. The front wheels 3 represented by unbroken lines denote the front wheels 3 when they are pointing straight ahead, while the front wheels 3 represented by broken lines denote the front wheels 3 when they are turned to cause the vehicle to change direction. The vehicle 1 is also equipped with lighting means in the form of a first headlamp 9 which has a first light emitting element 10, and with a second headlamp 11 which has a second light emitting element 12. The first headlamp 9 is arranged on the left side of the motor vehicle 1, while the second headlamp 11 is arranged on the right side of the vehicle. The first broken lines 13 depict schematically the extent of the light from the first headlamp 9 and the second broken lines 14 depict schematically the extent of the light from the second headlamp 11. As may be seen in the diagram, the light from the first headlamp 9 and the second headlamp 11 have different extents. More specifically, the first headlamp 9 illuminates the area to the left of the vehicle to a greater extent than the second headlamp 11 does, while the second headlamp 11 illuminates the area to the right of the vehicle to a greater extent than the first headlamp 9 does.

A control device comprising a powering means 16 and a control means 17 is arranged for powering the light emitting elements 10,12 in the headlamps 9,11. The powering unit 16 is controlled by the control unit 17 which is connected to the steering sensor 8 and to the powering means 16. The connections between various units in the motor vehicle 1 are not depicted, to increase the clarity of the diagram.

According to an alternative embodiment, a wheel sensor 15 for measuring the turning of the front wheels is arranged on each of the front wheels. Such wheel sensors may be arranged together with or instead of the steering sensor 8. The wheel sensors are also connected to the control means 17.

When the motor vehicle 1 is in motion, turning of the front wheels 3 is detected by the steering sensor 8 and/or the wheel sensors 15, resulting in a signal being sent to the control means 17. The control means 17 then sends a data signal to the powering means 16 to alter the power to the light emitting elements according to which way the wheels have been turned. In Figure 1, the wheels have been turned to the right and the control means 17 therefore sends a signal to the powering means 16 for the power to the second light emitting element 12 in the second headlamp 11 on the right side of the motor vehicle 1 to be increased and the power to the first headlamp on the left side of the motor vehicle 1 to be decreased. As the second headlamp 11 illuminates the area to the right of the vehicle to a greater extent than the first headlamp 9 on the left side of the vehicle does, the result will be that the area on the right side of the vehicle will be provided with more illumination. This will make it easier for a driver of the vehicle to see in the direction in which the motor vehicle is heading. Reducing the power to the first light emitting element in the first headlamp while at the same time increasing the power to the second light emitting element in the second headlamp means that the total power emitted to the carriageway can be kept within permissible limits set by vehicle traffic supervision authorities.

The magnitude of the change in the power supplied to the headlamps depends on the angle of turning of the front wheels. The further the front wheels 3 are turned, the greater the change in the power supplied to the headlamps. According to one embodiment there is in the control means 17 a wheel turning angle limit beyond which there will be no further power change.

According to one embodiment of the present invention, the control means 17 is also arranged to vary the power to the headlamps 9, 11 according to the speed of the motor vehicle. For this purpose a speed sensor 20 coupled to the control unit is arranged in the vehicle.

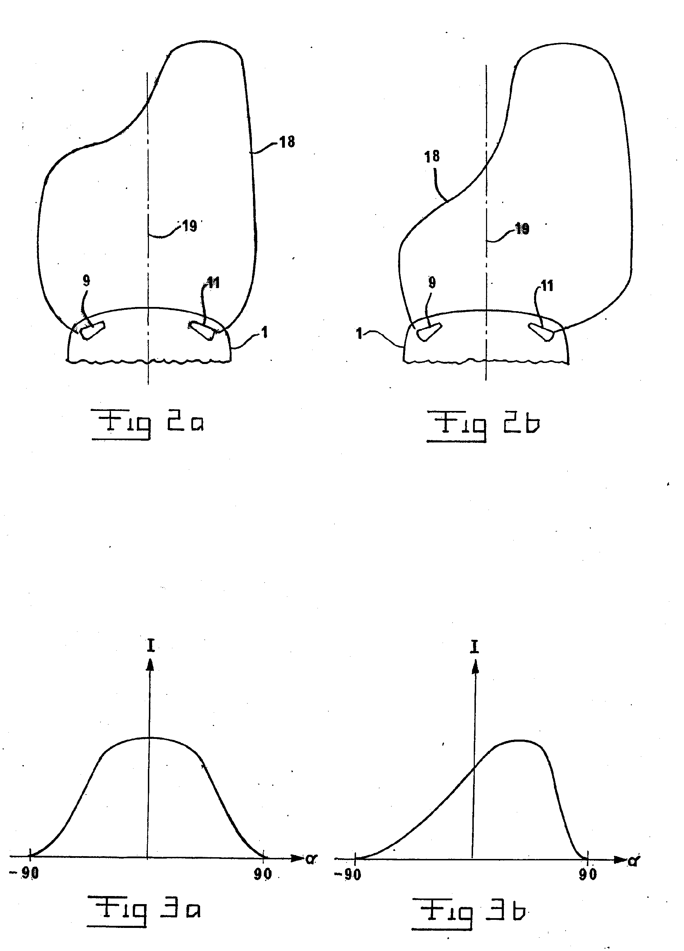

Figs. 2a and 2b respectively depict schematically the light distribution from a motor vehicle when it is being driven straight ahead and when it is turning. Fig. 2a depicts the front section of a vehicle 1 with a first headlamp 9 and a second headlamp 11 when the vehicle is travelling straight ahead. The intensity line 18 indicates the boundary beyond which the light intensity is below a predetermined level.
Fig 2b depicts the same motor vehicle as in Fig. 2a when its wheels are turned to the right. As described with reference to Fig. 1 above, the control means 17 has in this case increased the power to the second headlamp 11 on the right side of the vehicle and has decreased the power to the first headlamp 9 on the left side of the vehicle. As may be seen in the diagram, the intensity line 18 has moved to the right side of the vehicle 1. This means that it will easier for a driver of the motor vehicle to see the road in the direction in which the motor vehicle 1 is heading.

Fig. 3a and Fig. 3b respectively chart the light intensity as a function of the angle from the centreline 19 of the motor vehicle 1 when it is being driven straight ahead and when it is turning. Fig. 3b shows clearly more light in directions to the right of the symmetry line when the motor vehicle is turning.

According to an alternative embodiment of the present invention, the control means 17 controls the powering means 16 by voltage level.

The embodiment described may be altered without departing from the spirit and scope of the invention, which is only limited by the attached claims.

A vehicle according to the invention may of course have a number of wheels other than four. For example, the vehicle may be a motorcycle with only two wheels.

It is of course possible to arrange more than two headlamps on a motor vehicle according to the invention.

It is of course possible for wheels other than the front wheels to be steered. Such is for example the case of a truck.

It is possible for the control unit to be a single unit comprising both the control means and the powering means.

It is possible to have a separate powering means for each headlamp. There are a large number of possibilities for constructing a powering means for headlamps, possibilities which are known to specialists in the field.

## Claims

1. A lighting device for a motor vehicle (1), which lighting device comprises at least two lighting means (9, 11) for illuminating an area in front of the motor vehicle (1), and a control unit (16, 17) for controlling the electric power to the lighting means (9, 11) according to an input signal which indicates a parameter for the motor vehicle (1), **characterised in that** each of the lighting means (9, 11) is arranged to illuminate at least one area more powerfully than the other illuminating means (9, 11) illuminates the area, and the control unit (16, 17) is arranged to increase the electric power to at least one of the lighting means (9, 11) and decrease the power to at least one of the other lighting means (9, 11), in response to receiving a input signal which indicates a change in the parameter for the motor vehicle (1), so that the total light power emitted does not exceed predetermined values at any point illuminated by the lighting means (9, 11).

2. A lighting device according to claim 1, whereby the input signal indicates the direction of at least one steered wheel (3).

3. A lighting device according to claim 1, whereby the input signal indicates the motor vehicle's acceleration transverse to the main direction of movement.

4. A lighting device according to any one of the foregoing claims, whereby the control unit (16, 17) is arranged to determine a main direction on the basis of the input signal and to increase the electric power to one of the lighting means (9, 11) so that more light is emitted in the main direction determined.

5. A lighting device according to any one of the foregoing claims, whereby the lighting means (9, 11) comprise gas discharge lamps.

6. A lighting device according to any one of the foregoing claims whereby the control unit (16, 17) is arranged to send power to the lighting means (9, 11) in the form of pulses and to control the power by controlling the ratio between the length of the pulses and the spacing between the pulses.

7. A motor vehicle with a lighting device comprising at least two lighting means (9, 11), for illuminating the area in front of the motor vehicle (1), a sensor (8, 15) for measuring a parameter for the vehicle, and a control unit (16, 17) for controlling the electric power to the lighting means (9, 11) according to the measured parameter for the motor vehicle, **characterised in that** each of the lighting means (9, 11) is arranged to illuminate at least one area more powerfully than the other illuminating means (9, 11) illuminates the area, and the control unit (16, 17) is arranged to increase the electric power to at least one of the lighting means (9, 11) and decrease the power to at least one of the other lighting means (9, 11), in response to receiving a input signal which indicates a change in the parameter for the motor vehicle (1), so that the total light power emitted does not exceed predetermined values at any point illuminated by the lighting means (9, 11).

8. A motor vehicle according to claim 7, whereby at least one lighting means (9, 11) is arranged on each side of the vehicle's centreline (19) and whereby the lighting means arranged to the right of the centreline (19) is arranged to provide more illumination on the right side of the vehicle's centreline (19) and whereby the lighting means arranged to the left of the centreline (19) is arranged to provide more illumination on the left side of the vehicle's centreline (19).

9. A motor vehicle according to claim 7 or 8, whereby the sensor measures the direction of at least one steered wheel (3).

10. A motor vehicle according to claim 7 or 8, whereby the sensor measures the acceleration of the motor vehicle (1) transverse to the main direction of movement.

11. A motor vehicle according to any one of claims 7-10, whereby the control unit is arranged to determine a main direction on the basis of the signal from the sensor and to increase the electric power to one of the lighting means (9, 11) so that more light is emitted in the main direction determined.
